# EUROPÄISCHE PATENTANMELDUNG

(11) **EP 2 881 831 A1**
(43) Veröffentlichungstag der Anmeldung: **10.06.2015**
(21) Anmeldenummer: 14195380.2
(22) Anmeldetag: 28.11.2014
(51) Int. Cl.: G05F 1/56, H02M 3/158

(54) **Gleichspannungswandler und dessen Verwendung**

(30) Priorität: 06.12.2013 DE 102013225140
(71) Anmelder: Conti Temic Microelectronic GmbH, 90411 Nürnberg (DE)
(72) Erfinder: Vit, Omar, 90562 Heroldsberg (DE)
(74) Vertreter: Bonn, Roman Klemens

(57) **Zusammenfassung**

Die Erfindung betrifft einen Gleichspannungswandler (1). Der Gleichspannungswandler (1) umfasst eine Spule (5), einen elektronischen Eingangsschalter (SW0) zu einer eingangsseitigen Verbindung der Spule (5) mit einem Verbindungspol (9) einer Gleichspannungsquelle, wenigstens zwei jeweils über einen elektronischen Segmentschalter (SW1, SW2, SW3) mit der Spule (5) ausgangsseitig verbindbare Ausgangssegmente (A1, A2, A3), an denen jeweils eine Ausgangsspannung (U1, U2, U3) abgreifbar ist, und eine Steuereinheit (15) zur zeitabhängigen Ansteuerung des Eingangsschalters (SW0) und der Segmentschalter (SW1, SW2, SW3). Die Erfindung betrifft ferner die Verwendung eines derartigen Gleichspannungswandlers (1) zur Erzeugung mehrerer Ausgangsspannungen (U1, U2, U3) aus einer von der Gleichspannungsquelle erzeugten Eingangsspannung.

## Beschreibung

Die Erfindung betrifft einen Gleichspannungswandler und dessen Verwendung.

Unter Gleichspannungswandlern werden elektrische Schaltungen verstanden, die ihnen eingangsseitig zugeführte Gleichspannungen ausgangsseitig in davon verschiedene Gleichspannungen umwandeln. In der Regel weist ein Gleichspannungswandler eine elektrische Spule zur Speicherung elektrischer Energie auf, die mittels eines elektronischen Schalters abwechselnd mit einer eine Eingangsspannung erzeugenden Gleichspannungsquelle verbunden und dabei aufgeladen wird und anschließend mit einem Ausgangssegment verbunden und dabei über das Ausgangssegment zumindest teilweise entladen wird, so dass an dem Ausgangssegment eine von der Eingangsspannung verschiedene Ausgangsspannung abgegriffen werden kann.

Der Erfindung liegt die Aufgabe zu Grunde, einen verbesserten Gleichspannungswandler anzugeben. Ferner liegt der Erfindung die Aufgabe zu Grunde, eine geeignete Verwendung eines derartigen Gleichspannungswandlers anzugeben.

Die Aufgabe wird erfindungsgemäß hinsichtlich des Gleichspannungswandlers durch die Merkmale des Anspruchs 1 und hinsichtlich der Verwendung des Gleichspannungswandlers durch die Merkmale des Anspruchs 5 gelöst.

Vorteilhafte Ausgestaltungen der Erfindung sind Gegenstand der Unteransprüche.

Ein erfindungsgemäßer Gleichspannungswandler umfasst eine Spule, einen elektronischen Eingangsschalter zu einer eingangsseitigen Verbindung der Spule mit einem Verbindungspol einer Gleichspannungsquelle, wenigstens zwei jeweils über einen elektronischen Segmentschalter mit der Spule ausgangsseitig verbindbare Ausgangssegmente, an denen jeweils eine Ausgangsspannung abgreifbar ist, und eine Steuereinheit zur zeitabhängigen Ansteuerung des Eingangsschalters und der Segmentschalter.

Ein derartiger Gleichspannungswandler ermöglicht es, eine von der Gleichspannungsquelle gelieferte Eingangsspannung unter Verwendung einer einzigen Spule in mehrere verschiedene Ausgangsspannungen umzuwandeln. Dies wird durch verschiedene Ausgangssegmente ermöglicht, die jeweils über einen Segmentschalter mit der Spule verbunden sind. Es werden also zur Erzeugung mehrerer Ausgangsspannungen nur eine Spule als ein Energiespeicherelement, das sich wie eine (nicht ideale) Stromquelle verhält, und darüber hinaus lediglich Schaltungen benötigt. Dies erhöht die Effizienz des Gleichspannungswandlers gegenüber der Verwendung mehrerer Spulen zur Erzeugung je einer Ausgangsspannung und konzentriert Randemissionen und Verluste auf eine einzige Spule. Darüber hinaus reduziert es vorteilhaft Kosten, da Spulen im Vergleich zu elektronischen Schaltern kostenintensiver sind und der Preis von elektronischen Schaltern gemäß dem so genannten Mooreschen Gesetz zudem in Zukunft voraussichtlich schneller als der Preis von Spulen fallen wird.

Eine Ausgestaltung der Erfindung sieht vor, dass der elektronische Eingangsschalter und/oder wenigstens ein elektronischer Segmentschalter wenigstens einen Feldeffekttransistor aufweisen, dessen Gate über die Steuereinheit ansteuerbar ist. Feldeffekttransistoren sind bewährte und in verschiedenen Ausführungen verfügbare Bauelemente der Schaltungstechnik und eignen sich daher in besonderem Maße zur Realisierung des Eingangsschalters und der Segmentschalter.

Eine weitere Ausgestaltung der Erfindung sieht vor, dass wenigstens ein Ausgangssegment einen Kondensator aufweist, über den die Ausgangsspannung des Ausgangssegments abgreifbar ist. Dies ermöglicht vorteilhaft eine geeignete Energiespeicherung in Ausgangssegmenten zur Erzeugung der Ausgangsspannungen.

Eine weitere Ausgestaltung der Erfindung sieht wenigstens einen über die Steuereinheit ansteuerbaren Erdungsschalter zur Erdung der Spule vor. Dadurch wird vorteilhaft eine steuer- und regelbare Erdung der Spule ermöglicht.

Bei einer erfindungsgemäßen Verwendung eines derartigen Gleichspannungswandlers werden mehrere Ausgangsspannungen aus einer von der Gleichspannungsquelle erzeugten Eingangsspannung erzeugt, wobei die Spule über den Eingangsschalter abwechselnd während Einschaltzeitintervallen mit dem Verbindungspol der Gleichspannungsquelle verbunden und während Abschaltzeitintervallen von dem Verbindungspol der Gleichspannungsquelle getrennt wird. Dabei wird wenigstens ein Abschaltzeitintervall in wenigstens zwei Abschaltzeitintervallabschnitte aufgeteilt und jeder Abschaltzeitintervallabschnitt wird einem Ausgangssegment zugeordnet. Während jedes Abschaltzeitintervallabschnitts wird das dem Abschaltzeitintervallabschnitt zugeordnete Ausgangssegment mittels der Steuereinheit über einen Segmentschalter mit der Spule verbunden, die als Stromquelle agiert.

Es werden also Abschaltzeitintervalle schaltungstechnisch jeweils in mehrere Abschaltzeitintervallabschnitte aufgeteilt, in denen der Spulenstrom in jeweils ein Ausgangssegment geleitet wird. Mit anderen Worten werden Entladungen der Spule jeweils auf mehrere Ausgangssegmente aufgeteilt, um verschiedene Ausgangsspannungen zu erzeugen. Dies ermöglicht es vorteilhaft, die Spule zur gleichzeitigen Erzeugung und Regelung verschiedener Ausgangsspannungen zu nutzen.

Eine Ausgestaltung dieser Verwendung des Gleichspannungswandlers sieht vor, dass mittels der Steuereinheit wenigstens ein Ausgangssegment über einen Segmentschalter wenigstens zeitweise während wenigstens eines Einschaltzeitintervalls mit der Spule verbunden wird. Der Spulenstrom wird dabei also nicht nur während eines Abschaltzeitintervalls, sondern auch während eines Einschaltzeitintervalls wenigstens zeitweise in ein Ausgangssegment geleitet. Dies ermöglicht es vorteilhaft, den Gleichspannungswandler gleichzeitig in wenigstens einem Ausgangssegment als Abwärtswandler, beispielsweise für eine hohe elektrische Last, und in wenigstens einem Ausgangssegment als Aufwärtswandler zu verwenden.

Vorzugsweise werden ferner Sollwerte für über die Ausgangssegmente jeweils auszugebende Segmentenergien elektrischer Energie vorgegeben und die von den Ausgangssegmenten jeweils ausgegebenen Segmentenergien werden durch Ansteuerung der Segmentschalter mittels der Steuereinheit auf die Sollwerte geregelt. Dadurch werden die Ausgangsspannungen auf der Basis von Segmentenergien der einzelnen Ausgangssegmente geregelt. Diese Regelung berücksichtigt vorteilhaft, dass bei der gleichzeitigen Erzeugung mehrerer Ausgangsspannungen keine "direkte" Korrelation zwischen Eingangsgrößen und Ausgangsgrößen für eine einzelne Ausgangsspannung verfügbar ist, wohl aber eine Aufteilung der verfügbaren Eingangsenergie in Segmentenergien zur Regelung verwendet werden kann. Eine Regelung mittels eines mathematischen Modells einer Zustandsraumdarstellung ist ebenfalls möglich, erscheint hier aber aufgrund der Komplexität des Regelungsproblems praktisch schwer anwendbar.

Die Ausgangsspannungen werden vorzugsweise mittels der Steuereinheit durch eine pulsweitenmodulierte Ansteuerung der Segmentschalter mit einer maximalen Steilheit geregelt. Dies ermöglicht vorteilhaft ein besonders schnelles Schalten und dadurch eine besonders verlustarme und stabile Regelung der Ausgangsspannungen, da durch das schnelle Schalten einerseits dynamische Schaltverluste reduziert werden und andererseits Phasenverschiebungen minimiert werden, so dass keine dominanten Pole von dem Modulator abstammend in der Transferfunktion erzeugt werden, die zu Instabilitäten führen könnten.

Zur Regelung der Ansteuerung der Segmentschalter wird vorzugsweise ein Spulenstrom durch die Spule und/oder wenigstens ein Segmentstrom in einem Ausgangssegment mittels einer an einem Einschaltwiderstand des elektronischen Eingangsschalters und/oder eines elektronischen Segmentschalters abfallenden elektrischen Spannung PTAT-kompensiert gemessen. Unter dem Einschaltwiderstand wird hier der üblicherweise mit R_{DS(on)} bezeichnete Einschaltwiderstand eines elektronischen Schalters verstanden. Unter einer PTAT-kompensierten Strommessung (PTAT = Proportional To Absolute Temperature) über eine an dem Einschaltwiderstand abfallende Spannung wird hier eine Messung verstanden, die die Temperaturabhängigkeit des Einschaltwiderstands berücksichtigt. Eine derartige Strommessung ist vorteilhaft besonders einfach und präzise, denn bei elektronischen Schaltern wie Metall-Oxid-Halbleiter-Feldeffekttransistoren sind sowohl der R_{DS(on)} als auch dessen Temperaturabhängigkeit gut bekannt. Daher ermöglicht die Messung des Spannungsabfalls am R_{DS(on)} eine präzise Strommessung, wenn gleichzeitig auch die Temperatur ermittelt und berücksichtigt wird. Die Temperatur wird dabei vorzugsweise mittels eines so genannten PTAT-Schaltkreises ermittelt, in dem eine elektrische Spannung proportional zur absoluten Temperatur generiert wird.

Zur Regelung der Ansteuerung der Segmentschalter wird vorzugsweise wenigstens eine Ausgangsspannung durch eine temperaturstabilisierte Stromsenke gegen Masse gemessen. Auch dies wird vorzugsweise mittels einer PTAT-Schaltung realisiert. Dies verbessert die Stabilität der Regelung, da dadurch die Transferfunktionen der Spannungsfeedbacks unitär sind und so die Modulator-Transferfunktion nicht allzu groß gewählt werden muss.

Ausführungsbeispiele der Erfindung werden im Folgenden anhand von Zeichnungen näher erläutert.

Darin zeigen:
- Figur 1: einen prinzipiellen Aufbau eines Gleichspannungswandlers,
- Figur 2: schematisch ein Schaltbild eines Gleichspannungswandlers,
- Figur 3: Schaltzustände eines Eingangsschalters und dreier Segmentschalter in Abhängigkeit von einer Zeit gemäß einer ersten Schaltvariante,
- Figur 4: schematisch einen zeitlichen Verlauf eines Spulenstroms,
- Figur 5: schematisch zeitliche Verläufe dreier Segmentströme bei Verwendung der ersten Schaltvariante,
- Figur 6: schematisch einen zeitlichen Verlauf einer ersten Ausgangsspannung bei Verwendung der ersten Schaltvariante,
- Figur 7: schematisch einen zeitlichen Verlauf einer zweiten Ausgangsspannung bei Verwendung der ersten Schaltvariante,
- Figur 8: schematisch einen zeitlichen Verlauf einer dritten Ausgangsspannung bei Verwendung der ersten Schaltvariante,
- Figur 9: Schaltzustände eines Eingangsschalters und dreier Segmentschalter in Abhängigkeit von einer Zeit gemäß einer zweiten Schaltvariante,
- Figur 10: schematisch zeitliche Verläufe dreier Segmentströme bei Verwendung der zweiten Schaltvariante, und
- Figur 11: schematisch einen zeitlichen Verlauf einer dritten Ausgangsspannung bei Verwendung der zweiten Schaltvariante.

Einander entsprechende Teile sind in allen Figuren mit den gleichen Bezugszeichen versehen.

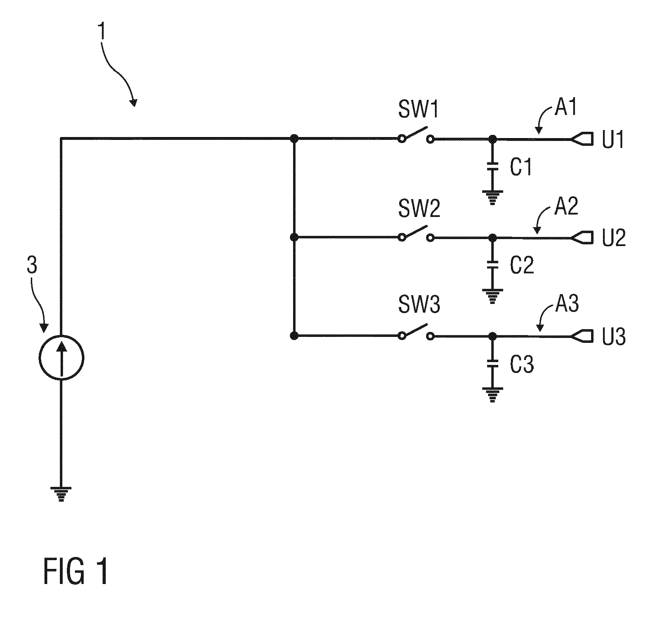

Figur 1 zeigt einen prinzipiellen Aufbau eines erfindungsgemäßen Gleichspannungswandlers 1. Der Gleichspannungswandler 1 weist in diesem Ausführungsbeispiel ein Eingangssegment 3 und drei Ausgangssegmente A1, A2, A3 auf, wobei das Eingangssegment 3 über einen ersten elektronischen Segmentschalter SW1 mit einem ersten Ausgangssegment A1, über einen zweiten elektronischen Segmentschalter SW2 mit einem zweiten Ausgangssegment A2 und über einen dritten elektronischen Segmentschalter SW3 mit dem dritten Ausgangssegment A3 verbunden ist. Die Ausgangssegmente A1, A2, A3 weisen jeweils einen Kondensator C1, C2, C3 auf, über den eine Ausgangsspannung U1, U2, U3 abgreifbar ist. Ein erfindungsgemäßer Gleichspannungswandler 1 kann in alternativen Ausführungsbeispielen auch weniger oder mehr als drei Ausgangssegmente A1, A2, A3 aufweisen.

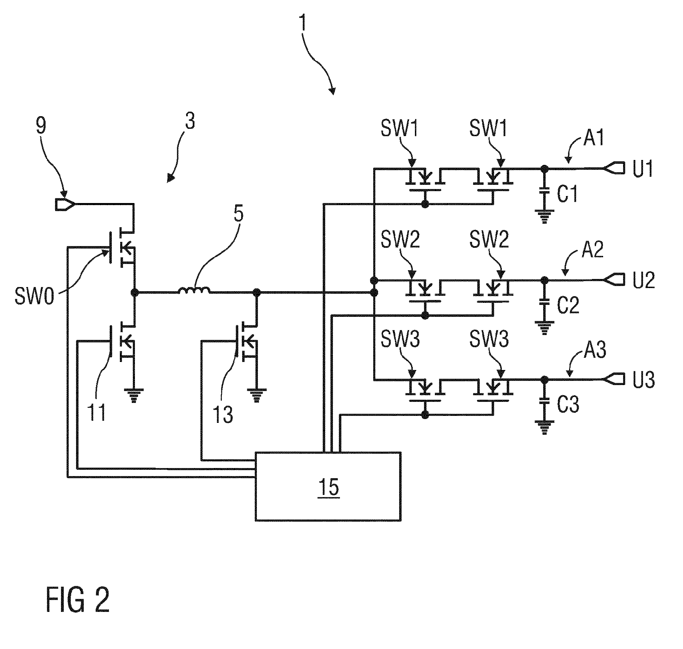

Figur 2 zeigt schematisch ein Schaltbild eines Ausführungsbeispiels des in Figur 1 prinzipiell dargestellten Gleichspannungswandlers 1. Das Eingangssegment 3 umfasst eine Spule 5, einen Eingangsschalter SW0 zu einer eingangsseitigen Verbindung der Spule 5 mit einem Verbindungspol 9 einer Gleichspannungsquelle, einen ersten Erdungsschalter 11 zur eingangsseitigen Erdung der Spule 5 und einen zweiten Erdungsschalter 13 zur ausgangsseitigen Erdung der Spule 5. Der Gleichspannungswandler 1 weist ferner eine Steuereinheit 15 zur zeitabhängigen Ansteuerung des Eingangsschalters SW0, der Segmentschalter SW1, SW2, SW3 und der Erdungsschalter 11, 13 auf.

Der Eingangsschalter SW0 und die Erdungsschalter 11, 13 sind dabei in diesem Ausführungsbeispiel jeweils als ein Feldeffekttransistor, z.B. als ein MOSFET ( = Metall-Oxid-Halbleiter-Feldeffekttransistor) ausgebildet, und die Segmentschalter SW1, SW2, SW3 sind jeweils als zwei in Reihe gespiegelt geschaltete Feldeffekttransistoren, z.B. jeweils als ein MOSFET, ausgebildet, wobei das Gate jedes dieser Feldeffekttransistoren mit der Steuereinheit 15 zur Ansteuerung des jeweiligen Eingangsschalters SW0, Erdungsschalters 11, 13 oder Segmentschalters SW1, SW2, SW3 verbunden ist.

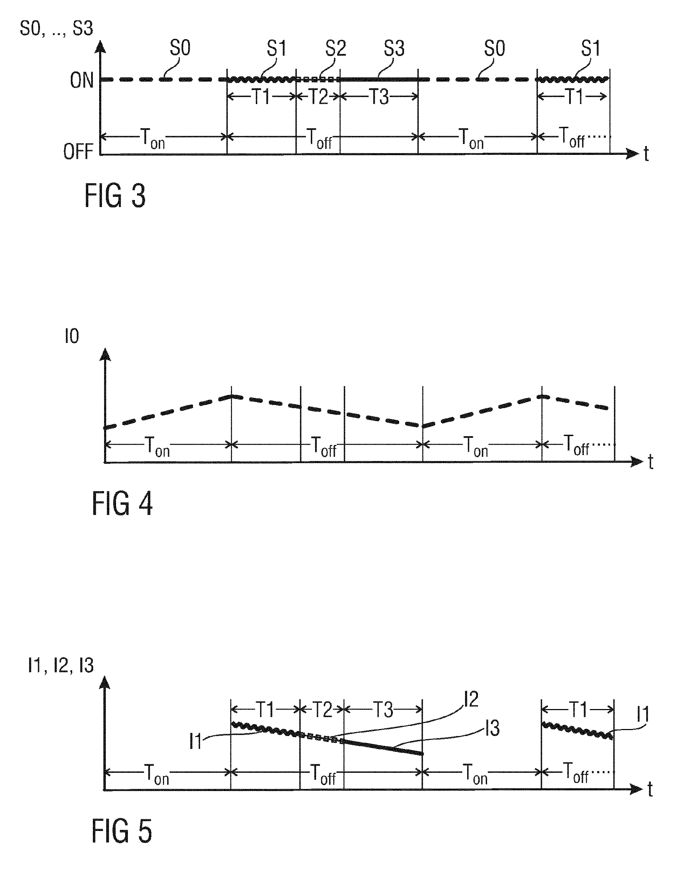

Die erfindungsgemäße Verwendung des in den Figuren 1 und 2 dargestellten Gleichspannungswandlers 1 wird im Folgenden anhand der Figuren 3 bis 11 beschrieben.

Figur 3 zeigt Schaltzustände S0 bis S3 des Eingangsschalters SW0 und der Segmentschalter SW1, SW2, SW3 in Abhängigkeit von einer Zeit t gemäß einer ersten Schaltvariante. Dabei bezeichnen S0 den Schaltzustand des Eingangsschalters SW0, S1 den Schaltzustand des ersten Segmentschalters SW1, S2 den Schaltzustand des zweiten Segmentschalters SW2 und S3 den Schaltzustand des dritten Segmentschalters SW3. Die Schaltzustände S0 bis S3 wechseln jeweils zwischen einem Einschaltzustand ON, in dem der jeweilige Eingangsschalter SW0 oder Segmentschalter SW1, SW2, SW3 eingeschaltet, d.h. stromleitend ist, und einem Abschaltzustand OFF, in dem der jeweilige Eingangsschalter SW0 oder Segmentschalter SW1, SW2, SW3 abgeschaltet, d.h. stromsperrend ist.

Der Eingangsschalter SW0 wird abwechselnd während Einschaltzeitintervallen Tₒₙ eingeschaltet und während Abschaltzeitintervallen T_{off} abgeschaltet.

Die Abschaltzeitintervalle T_{off} werden jeweils in drei Abschaltzeitintervallabschnitte T1, T2, T3 aufgeteilt, in denen jeweils einer der Segmentschalter SW1, SW2, SW3 eingeschaltet wird und die anderen Segmentschalter SW1, SW2, SW3 abgeschaltet werden. Dabei werden jeweils die ersten Abschaltzeitintervallabschnitte T1 dem ersten Ausgangssegment A1, die zweiten Abschaltzeitintervallabschnitte T2 dem zweiten Ausgangssegment A2 und die dritten Abschaltzeitintervallabschnitte T3 dem dritten Ausgangssegmente A3 zugeordnet. Dementsprechend wird der erste Segmentschalter SW1 jeweils während der ersten Abschaltzeitintervallabschnitte T1 eingeschaltet und während der übrigen Zeit abgeschaltet. Der zweite Segmentschalter SW2 wird jeweils während der zweiten Abschaltzeitintervallabschnitte T2 eingeschaltet und während der übrigen Zeit abgeschaltet. Der dritte Segmentschalter SW3 wird jeweils während der dritten Abschaltzeitintervallabschnitte T3 eingeschaltet und während der übrigen Zeit abgeschaltet.

Figur 4 zeigt schematisch einen resultierenden Spulenstrom I0 durch die Spule 5. Der Spulenstrom I0 steigt während jedes Einschaltzeitintervalls Tₒₙ an und fällt während jedes Abschaltzeitintervalls T_{off} wieder ab.

Figur 5 zeigt schematisch die aus der in Figur 3 dargestellten ersten Schaltvariante resultierenden Segmentströme I1, I2, I3 in den Ausgangssegmenten A1, A2, A3. Da der Spulenstrom I0 nur während der ersten Abschaltzeitintervallabschnitte T1 zum ersten Ausgangssegment A1 geleitet wird, ergibt sich in dem ersten Ausgangssegment A1 ein erster Segmentstrom I1, der während jedes ersten Abschaltzeitintervallabschnitts T1 abnimmt und sonst verschwindet. Entsprechend ergibt sich in dem zweiten Ausgangssegment A2 ein zweiter Segmentstrom I2, der während jedes zweiten Abschaltzeitintervallabschnitts T2 abnimmt und sonst verschwindet, und in dem dritten Ausgangssegment A3 ergibt sich ein dritter Segmentstrom I3, der während jedes dritten Abschaltzeitintervallabschnitts T3 abnimmt und sonst verschwindet.

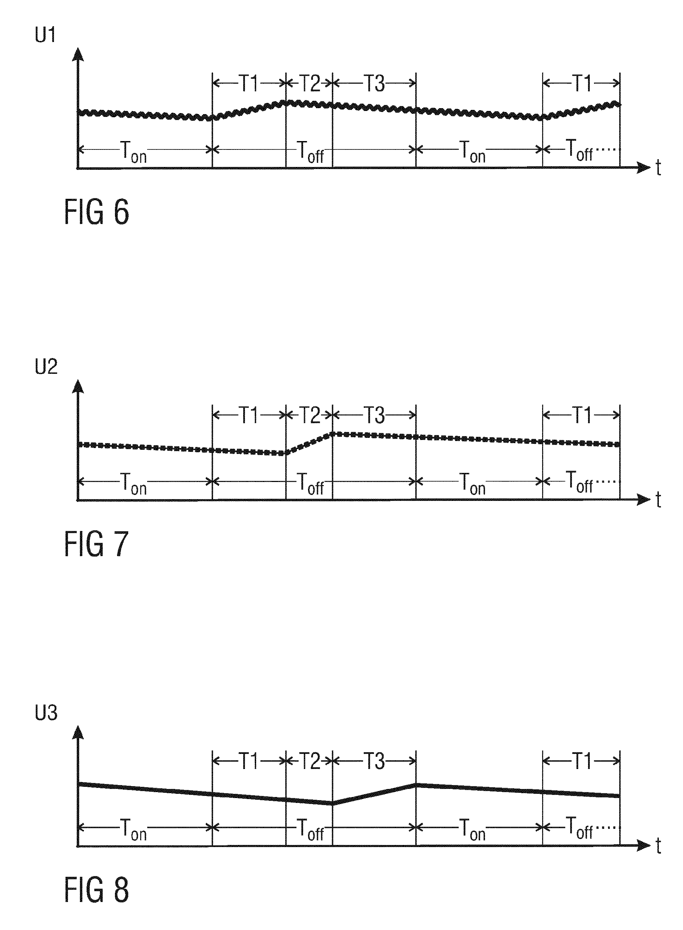

Die Figuren 6 bis 8 zeigen schematisch jeweils eine aus der in Figur 3 dargestellten ersten Schaltvariante resultierende Ausgangsspannung U1, U2, U3. Die erste Ausgangsspannung U1 steigt gemäß Figur 6 während der ersten Abschaltzeitintervallabschnitte T1 jeweils an und fällt während der übrigen Zeit ab. Die zweite Ausgangsspannung U2 steigt gemäß Figur 7 während der zweiten Abschaltzeitintervallabschnitte T2 jeweils an und fällt während der übrigen Zeit ab. Die dritte Ausgangsspannung U3 steigt gemäß Figur 8 während der dritten Abschaltzeitintervallabschnitte T3 jeweils an und fällt während der übrigen Zeit ab.

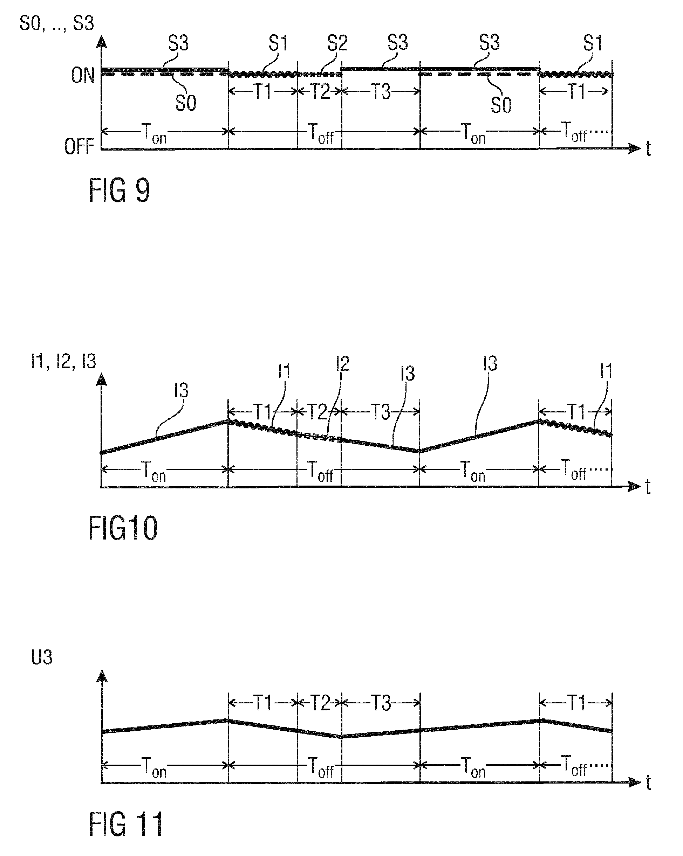

Figur 9 zeigt analog zu Figur 3 die Schaltzustände S0 bis S3 gemäß einer zweiten Schaltvariante. Im Unterschied zu der in Figur 3 dargestellten ersten Schaltvariante ist der dritte Segmentschalter SW3 nicht nur während der dritten Abschaltzeitintervallabschnitte T3, sondern auch während der Einschaltzeitintervalle Tₒₙ eingeschaltet und während der ersten Abschaltzeitintervallabschnitte T1 und der zweiten Abschaltzeitintervallabschnitte T2 jeweils abgeschaltet. Auf diese Weise kann erreicht werden, dass der Gleichspannungswandler 1 im dritten Ausgangssegment A3 als Abwärtswandler und im ersten Ausgangssegment A1 und im zweiten Ausgangssegment A2 jeweils als Aufwärtswandler wirkt. Diese Schaltvariante kann beispielsweise vorteilhaft verwendet werden, wenn die dritte Ausgangsspannung U3 an einer hohen elektrischen Last angelegt wird.

Figur 10 zeigt analog zu Figur 5 schematisch die aus der in Figur 9 dargestellten zweiten Schaltvariante resultierenden Segmentströme I1, I2, I3 in den Ausgangssegmenten A1, A2, A3. Im Unterschied zu Figur 5 ist der dritte Segmentstrom I3 in diesem Fall während der Einschaltzeitintervalle Tₒₙ von Null verschieden und ansteigend, da der dritte Segmentschalter SW3 während der Einschaltzeitintervalle Tₒₙ eingeschaltet ist, so dass der Spulenstrom I0 in das dritte Ausgangssegment A3 geleitet wird. Während der Abschaltzeitintervalle T_{off} ändert sich prinzipiell nichts gegenüber den in Figur 5 dargestellten Verläufen der Segmentströme I1, I2, I3.

Figur 11 zeigt schematisch die aus der in Figur 9 dargestellten zweiten Schaltvariante resultierende dritte Ausgangsspannung U3. Die dritte Ausgangsspannung U3 steigt während der dritten Abschaltzeitintervallabschnitte T3 und der Einschaltzeitintervalle Tₒₙ jeweils an und fällt während der ersten Abschaltzeitintervallabschnitte T1 und der zweiten Abschaltzeitintervallabschnitte T2 jeweils ab.

Die aus der in Figur 9 dargestellten zweiten Schaltvariante resultierenden Verläufe der ersten Ausgangsspannung U1 und der zweiten Ausgangsspannung U2 ändern sich prinzipiell nicht gegenüber den in den Figuren 6 und 7 dargestellten Verläufen.

Die Schaltzustände S0 bis S3 werden in den oben anhand der Figuren 1 bis 11 beschriebenen Ausführungsbeispiele jeweils mittels der Steuereinheit 15 geregelt. Die Regelung erfolgt dabei vorzugsweise pulsweitenmoduliert auf der Basis von Energiemengen, der Eingangsspannung und den Ausgangsspannungen U1, U2, U3. Dazu werden zur Regelung der Schaltzustände S1 bis S3 der Segmentschalter SW1, SW2, SW3 Sollwerte der von den Ausgangssegmenten A1, A2, A3 auszugebenden Segmentenergien elektrischer Energie und der Ausgangsspannungen U1, U2, U3 vorgegeben und die Abschaltzeitintervalle T_{off} in Abhängigkeit von den Segmentenergien und den Ausgangsspannungen U1, U2, U3, die von den Ausgangssegmenten A1, A2, A3 jeweils ausgegeben werden, und der Eingangsenergie in die Abschaltzeitintervallabschnitte T1, T2, T3 aufgeteilt. Die Istwerte der von den Ausgangssegmenten A1, A2, A3 ausgegebenen Segmentenergien werden durch Messung der Segmentströme I1, I2, I3 und Ausgangsspannungen U1, U2, U3 ermittelt. Die Segmentströme I1, I2, I3 werden dabei vorzugsweise jeweils über eine elektrische Spannung gemessen, die an einem üblicherweise mit R_{DS(on)} bezeichneten Einschaltwiderstand des zugehörigen Segmentschalters SW1, SW2, SW3 abfällt. Die Ausgangsspannungen U1, U2, U3 werden vorzugsweise jeweils durch eine Stromsenke gegen Masse PTAT-kompensiert gemessen.

### BEZUGSZEICHENLISTE

- 1: Gleichspannungswandler
- 3: Eingangssegment
- 5: Spule
- 9: Verbindungspol
- 11, 13: Erdungsschalter
- 15: Steuereinheit
- A1, A2, A3: Ausgangssegment
- C1, C2, C3: Kondensator
- I0: Spulenstrom
- I1, I2, I3: Segmentstrom
- OFF: Abschaltzustand
- ON: Einschaltzustand
- S0 bis S3: Schaltzustand
- SW0: Eingangsschalter
- SW1, SW2, SW3: Segmentschalter
- t: Zeit
- T_{off}: Abschaltzeitintervall
- Tₒₙ: Einschaltzeitintervall
- T1, T2, T3: Abschaltzeitintervallabschnitt
- U1, U2, U3: Ausgangsspannung

## Patentansprüche

1. Gleichspannungswandler (1), umfassend
- eine Spule (5),
- einen elektronischen Eingangsschalter (SW0) zu einer eingangsseitigen Verbindung der Spule (5) mit einem Verbindungspol (9) einer Gleichspannungsquelle,
- wenigstens zwei jeweils über einen elektronischen Segmentschalter (SW1, SW2, SW3) mit der Spule (5) ausgangsseitig verbindbare Ausgangssegmente (A1, A2, A3), an denen jeweils eine Ausgangsspannung (U1, U2, U3) abgreifbar ist,
- und eine Steuereinheit (15) zur zeitabhängigen Ansteuerung des Eingangsschalters (SW0) und der Segmentschalter (SW1, SW2, SW3).

2. Gleichspannungswandler (1) nach Anspruch 1,
**dadurch gekennzeichnet, dass** der elektronische Eingangsschalter (SW0) und/oder wenigstens ein elektronischer Segmentschalter (SW1, SW2, SW3) wenigstens einen Feldeffekttransistor aufweisen, dessen Gate über die Steuereinheit (15) ansteuerbar ist.

3. Gleichspannungswandler (1) nach einem der vorhergehenden Ansprüche, **dadurch gekennzeichnet, dass** wenigstens ein Ausgangssegment (A1, A2, A3) einen Kondensator (C1, C2, C3) aufweist, über den die Ausgangsspannung (U1, U2, U3) des Ausgangssegments (A1, A2, A3) abgreifbar ist.

4. Gleichspannungswandler (1) nach einem der vorhergehenden Ansprüche, **gekennzeichnet durch** wenigstens einen über die Steuereinheit (15) ansteuerbaren Erdungsschalter (11, 13) zur Erdung der Spule (5).

5. Verwendung eines Gleichspannungswandlers (1) nach einem der vorhergehenden Ansprüche zur Erzeugung mehrerer Ausgangsspannungen (U1, U2, U3) aus einer von der Gleichspannungsquelle erzeugten Eingangsspannung, wobei
- die Spule (5) über den Eingangsschalter (SW0) abwechselnd während Einschaltzeitintervallen (Tₒₙ) mit dem Verbindungspol (9) der Gleichspannungsquelle verbunden wird und während Abschaltzeitintervallen (T_{off}) von dem Verbindungspol (9) der Gleichspannungsquelle getrennt wird,
- wenigstens ein Abschaltzeitintervall (T_{off}) in wenigstens zwei Abschaltzeitintervallabschnitte (T1, T2, T3) aufgeteilt wird und jeder Abschaltzeitintervallabschnitt (T1, T2, T3) einem Ausgangssegment (A1, A2, A3) zugeordnet wird,
- und während jedes Abschaltzeitintervallabschnitts (T1, T2, T3) das dem Abschaltzeitintervallabschnitt (T1, T2, T3) zugeordnete Ausgangssegment (A1, A2, A3) mittels der Steuereinheit (15) über einen Segmentschalter (SW1, SW2, SW3) mit der Spule (5) verbunden wird.

6. Verwendung nach Anspruch 5,
**dadurch gekennzeichnet, dass** mittels der Steuereinheit (15) wenigstens ein Ausgangssegment (A1, A2, A3) über einen Segmentschalter (SW1, SW2, SW3) wenigstens zeitweise während wenigstens eines Einschaltzeitintervalls (Tₒₙ) mit der Spule (5) verbunden wird.

7. Verwendung nach Anspruch 5 oder 6,
**dadurch gekennzeichnet, dass** Sollwerte für über die Ausgangssegmente (A1, A2, A3) jeweils auszugebende Segmentenergien elektrischer Energie und Ausgangsspannungen (U1, U2, U3) vorgegeben werden und die von den Ausgangssegmenten (A1, A2, A3) jeweils ausgegebenen Segmentenergien durch Ansteuerung der Segmentschalter (SW1, SW2, SW3) mittels der Steuereinheit (15) auf die Sollwerte geregelt werden.

8. Verwendung nach einem der Ansprüche 5 bis 7,
**dadurch gekennzeichnet, dass** die Ausgangsspannungen (U1, U2, U3) mittels der Steuereinheit (15) durch eine pulsweitenmodulierte Ansteuerung der Segmentschalter (SW1, SW2, SW3) geregelt werden.

9. Verwendung nach einem der Ansprüche 5 bis 8,
**dadurch gekennzeichnet, dass** zur Regelung der Ansteuerung der Segmentschalter (SW1, SW2, SW3) ein Spulenstrom (I0) durch die Spule (5) und/oder wenigstens ein Segmentstrom (I1, I2, I3) in einem Ausgangssegment (A1, A2, A3) mittels einer an einem Einschaltwiderstand des elektronischen Eingangsschalters (SW0) und/oder eines elektronischen Segmentschalters (SW1, SW2, SW3) abfallenden elektrischen Spannung PTAT-kompensiert gemessen wird.

10. Verwendung nach einem der Ansprüche 5 bis 9,
**dadurch gekennzeichnet, dass** zur Regelung der Ansteuerung der Segmentschalter (SW1, SW2, SW3) wenigstens eine Ausgangsspannung (U1, U2, U3) durch eine Stromsenke PTAT-kompensiert gegen Masse gemessen wird.
